## Europäisches Patentamt

## European Patent Office

## Office européen des brevets

(11) Publication number: **0 214 840**
**B1**

(12) # EUROPEAN PATENT SPECIFICATION

(45) Date of publication of the patent specification:
**27.12.89**

(51) Int. Cl.⁴: **G06F 15/16**, G06F 13/36, G06F 13/14

(21) Application number: **86306824.3**

(22) Date of filing: **03.09.86**

(54) Method of conflict resolution in a parallel processor network.

(30) Priority: **05.09.85 US 772835**

(43) Date of publication of application:
**18.03.87 Bulletin 87/12**

(45) Publication of the grant of the patent:
**27.12.89 Bulletin 89/52**

(84) Designated Contracting States:
**DE FR GB IT**

(56) References cited:
**US-A- 3 701 109**
**US-A- 4 314 335**

**COMPUTER DESIGN, vol. 16, no. 8, August 1977, pages 120-123, Concord, US; K. SOE HOJBERG: "An asynchronous arbiter resolves resource allocation conflicts on a random priority basis"**
**IEEE TRANSACTIONS ON COMPUTERS, vol. C-30, no. 10, October 1981, pages 771-780, IEEE, New York, US; J.H. PATEL: "Performance of processor-memory interconnections for multiprocessors"**

(73) Proprietor: **International Business Machines Corporation, Old Orchard Road, Armonk, N.Y. 10504(US)**

(72) Inventor: **Paul, Wolfgang Jakob, 483 Los Pinos Way, San Jose California 95123(US)**
Inventor: **Pippenger, Nicholas John, 16322 Roble Lane, Los Gatos California 95030(US)**

(74) Representative: **Grant, Iain Murray, IBM United Kingdom Limited Intellectual Property Department Hursley Park, Winchester Hampshire SO21 2JN(GB)**

## Description

This invention relates to conflict resolution in a parallel processor network.

In the prior art, White et al, USP 4,199,661, "Method and Apparatus for Eliminating Conflicts on a Communication Channel", issued April 22, 1980, shows that it is broadly known to alter a fixed priority protocol among a plurality of processors accessing a common channel to create another type of bias. As applied to crossbar switches, taken either singly or in multistage networks, these fixed priority protocols have been used in the implementation of processor-to-processor interconnections in highly parallel computers.

For forming an inter-processor communication arrangement, a d-X-d crossbar switch may comprise two sets of ports $I(i)$ (inputs) and $O(j)$ (outputs) and a set of switches $s(ij)$, where $i$ and $j$ range from 1 to d. Each of the switches $s(ij)$ can be open or closed. The effect of closing switch $s(ij)$ is to establish a connection between port $I(i)$ and port $O(j)$. The connection can be unidirectional (data is only sent from inputs $I(i)$ and outputs $O(j)$) or bidirectional (data can be sent back and forth between $I(i)$ and $O(j)$). Also, for each $i$, at most one switch $s(ij)$ is closed at any time; i.e. each $I(i)$ is connected to at most one $O(j)$. However, if multiple inputs $i$ desire to transmit to a single output $j$, conflicts arise.

Prior art implementation has been designed upon several common assumptions. The first assumption is that the origin and destinations of messages are uniformly distributed. A second assumption is that the origin and destinations of different messages are independent. A third assumption is that conflicts among inputs of a crossbar for access to an output of the crossbar are resolvable by uniform and independent random selection of one of the competing inputs. By "random selection", it is meant either one based on the outcome of a truly random physical experiment, or one based on the outcome of a pseudo-random mathematical process.

It is believed that uniformity of traffic can be achieved by an appropriate design of communication protocols executable by the processors. Independence of traffic can be ensured by transmitting each message in two phases through a uniformly and independently selected intermediate processor. Thus, departures from independence of traffic should cause no more than a factor of two degradation.

Random conflict resolution can be ensured by design of the crossbars. However, this may be costly for two reasons. First, either random numbers must be generated in the processors, transmitted with the messages and captured by the crossbars, or they must be generated by the crossbars themselves. Second, the uniform selection of a competing input is a logically complicated function requiring many gates for its realisation.

Illustratively, conflict resolution occurs between inputs $i_1,...,i_s$. First, where a local random experiment is performed, it is necessary to determine the number of conflicting requests $s$. Next, it is necessary to pick a random number $r$ between $1,...,s$ and connect the input $i_r$ to the output. Alternatively, the processors send random numbers $r_1...r_s$ together with a request to connect $i_1...,i_s$ to a predetermined output. In this regard, it is necessary to receive $r_1...,r_s$, determine the largest, say $r_{max}$ (not guaranteed to resolve conflict). Lastly, it is necessary to connect the input $i_{max}$. It is also to be noted that the above mechanism has to be replicated for each output.

It is accordingly an object of this invention to devise a way of avoiding the cost and delay associated with the random conflict resolution of the prior art.

The foregoing objects are satisfied by replacing the above-described method of random conflict resolution by a fixed and unmodified priority conflict resolution in the inter-processor communications arrangement, together with an independently undertaken, randomly generated, restraint in making requests on the part of each participating processor, where the restraint parameters of the set of processors is ordered in a manner compatible with the fixed priority resolution order.

The invention provides a method of conflict resolution in a parallel processor network comprising the steps of:
– providing, in the inter-processor communication arrangement of the network, a fixed priority resolution mechanism;
– arranging for each processor, when wishing to communicate with another processor, independently of any other processor, to generate a random number, comparing the random number with a threshold particular to the potentially requesting processor, and causing the processor to send its request to the inter-processor communication arrangement only if the generated random number is in a given inequality state relative to the threshold; and
– setting the threshold in and for each processor such that there exists a bias created in favour of the lowest priority processors as determined by the fixed priority order.

The threshold magnitudes are functions of the number of processors and their priority, which processors constitute the parallel computer.

The present invention will be described further by way of example with reference to one embodiment of the invention, the inter-processor communication arrangement of which is illustrated in the accompanying drawings, in which:

Figure 1 sets out logic and gating for switchably interconnecting processors through a crosspoint connecting matrix;

Figure 2 depicts a logic detail of the fixed priority resolution circuit of Figure 1; and

Figures 3 and 4 show program array logic relations for the PAL16LD8 unit (priority circuit) and the PAL16HD8 units (forward, backward MUX), respectively, required in the Figure 2 implementation of the Figure 1 logic arrangement.

As already stated, the invention provides a method of random conflict resolution by a fixed and unmodified priority conflict resolution in the interprocessor communications arrangement, together with an independently undertaken, randomly generated, restraint in making requests on the part of each participating processor, where the restraint parameters of the set of processors is ordered in a manner compatible with the fixed priority resolution order. The drawings illustrate the inter- processor communications arrangement, the processes undertaken by the processors being described in words only.

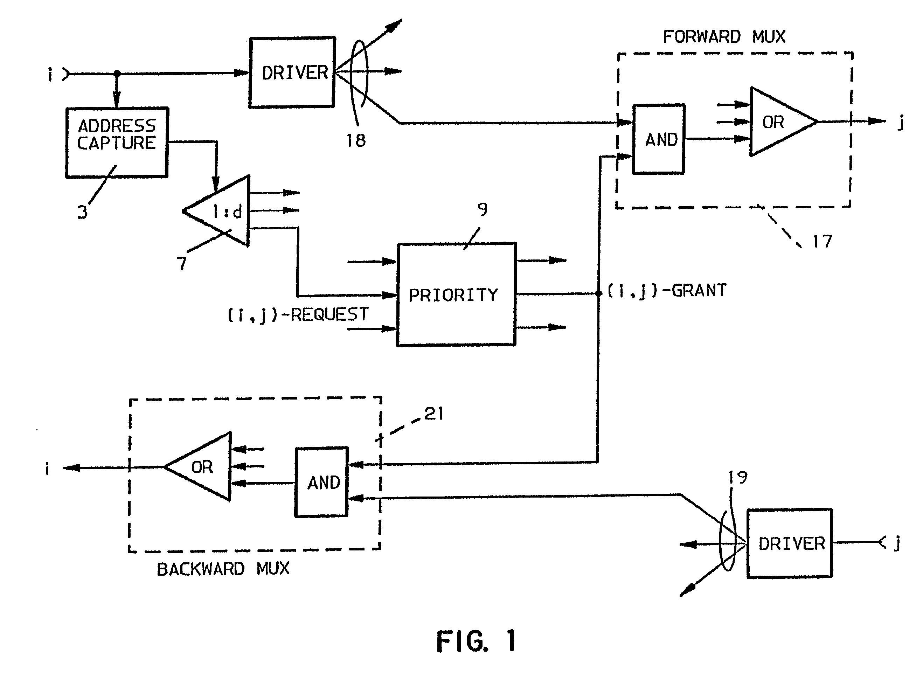

Referring now to Figure 1, there is shown an illustration of a fixed priority crossbar switch, which is one of several forms of fixed priority inter-processor communications arrangements that could have been used. Each input to the crossbar switch, of which only the ith is depicted, is monitored by circuitry (3,7). This circuitry detects requests for connection to an output 18 and captures the address 3 of the requested output. A one-out-of-d circuit 7 provides a signal indicating that the ith input requests connection to the jth output, i.e. the (i,j) request. For each output, a priority circuit 9 resolves conflicts among inputs for connection to the output. Also, the priority circuit provides, for each input i and for each output j, a signal indicating that the ith input is granted access to the jth output. These signals are used by multiplexers 17 and 21. The multiplexers provide appropriate forward paths 18 for each output and backward paths 19 for each input. An obvious use for the backward connection is to send an acknowledge signal from a receiving processor to a sending processor, so that the sending processor knows that his request has been granted.

Priority circuit 9 grants access to the ith input if the ith input requests connection, but the first through the (i-1) inputs do not request connection.

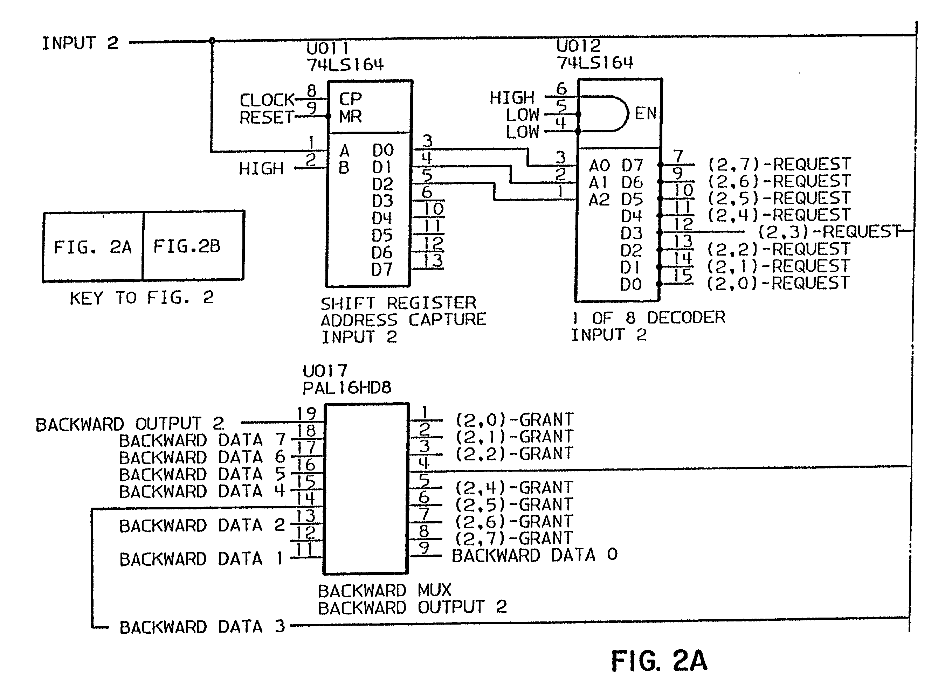

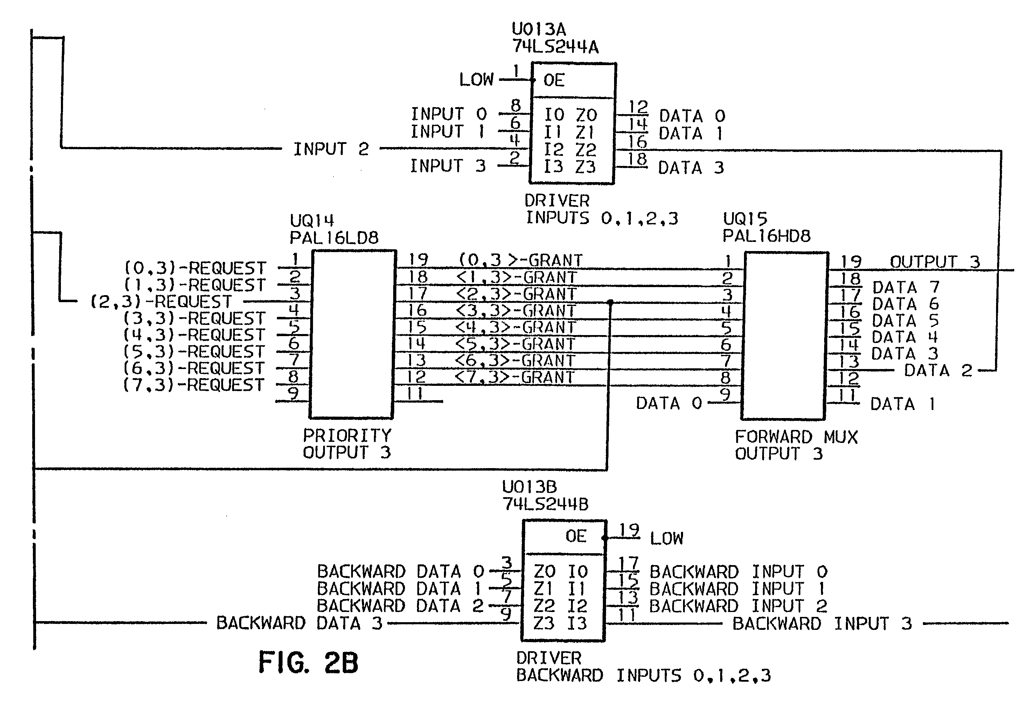

Figure 2 is an implementation detail of Figure 1 using TTL components for an 8×8 crossbar with fixed conflict resolution. Only the path from input I(2) to output O(3) and the associated backward path are shown.

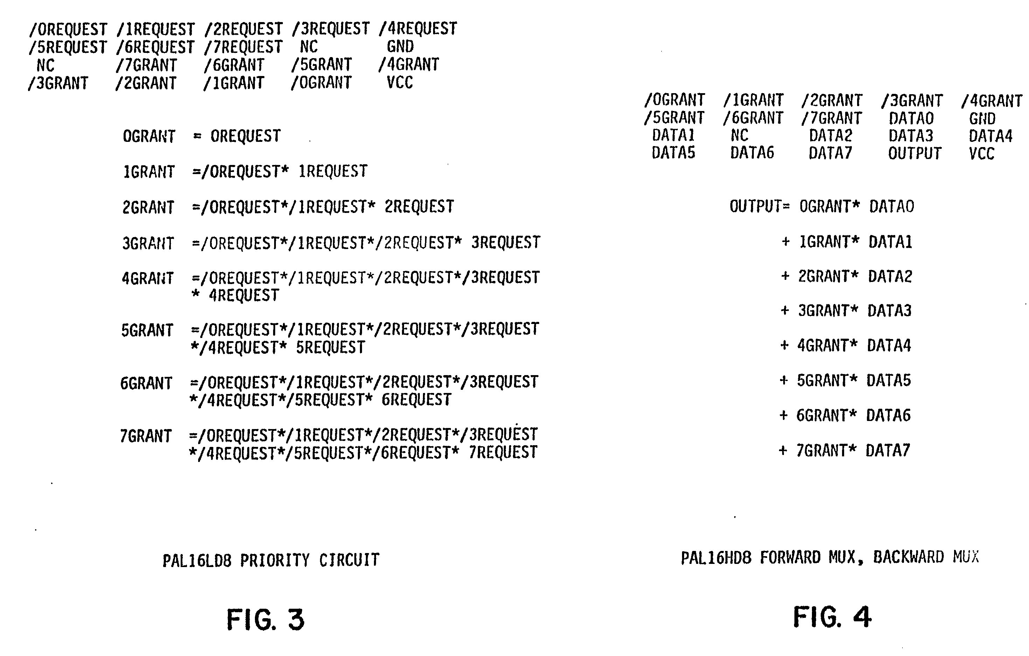

Addresses are captured by sequentially clocking the 3-bit destination address for input 2 into a shift register (U011). The 1-of-8 circuit comes straight out of the catalogue (U012). The priority circuit is realised as a PAL (U014). The PAL equations are in Figure 3. Forward MUX (U015) and backward MUX (U017) are realised as PALs. The same PAL equations can be used for both PALs. They are in Figure 4. LS244 ohips are used for drivers. Each such component contains eight drivers. Thus, forward drivers and backward drivers for several inputs and backward inputs can share the same component (U013A, U013B).

However, this is only half the story. The processors apply independent self-restraint on the making of requests. This is done in a processor wishing to communicate with another such by the processor generating a random number, using anyone a number of well-known random or pseudo-random number generators and comparing the number so generated with a preset threshold value which is unique to that processor, making the request if and only if the appropriate inequality obtains. These thresholds are related to the fixed priority of the intercommunications arrangement as is the significant inequality state. In the particular case described, the threshold increase with the fixed priority order and the inequality state is "GREATER-THAN".

With random conflict resolution, it is assumed that during each cycle each processor independently originates a message with probability p and that all the destinations of all messages are uniformly and independently distributed over all processors. With fixed priority conflict resolution, it is further assumed that each processor i originating a message actually attempts to transmit the message, only with probability $q_i$, independently of the attempts of all other processors. The parameters $q_i$ are determined such that they equalise the throughputs of the processors and achieve the highest throughput consistent with equality.

Consider first a single d-X-d crossbar with random conflict resolution. The probability that a particular input requests connection to some output is p, and the probability that some input is granted access to a particular output is $1-(1-p/d)^d$. This expectation is in turn equal to the throughput per processor.

Consider next a d(1)...d(k)-X-d(1)...d(k) delta network as described by Patel, "Performance of Processor Memory Interconnections for Multiprocessors", IEEE Transactions on Computers, 1981, pp. 771-780. Then for 1.j.k, and letting $p_j$ denote the throughput per processor for the first j stages, it follows that:

$p)=p$ and for 1.j.k, $p_j=1-(1-p_{(j-1)}/d(j))^{d(j)}$.

In the case $d(1)=...=d(k)=d$, $p_j=f(p_{j-1})$, where $f(x)=1-(1-x/d)^d$. Since $f(x)=x-((d-1)/2d)x2+O(x3)$, $p_k$ is asymptotic to $2d/(d-1)k$ as k approaches infinity with d fixed.

Turning now to priority conflict resolution, consideration must first be given to a single d-X-d crossbar. The probability that input i requests access to output j is $(pq_j)/d$. The probability that input i is granted access to output j is $(pq_i)(1-pq_{i-1})...(1-pq_!)$. Equating these probabilities for i=1,...,d yields the recurrence $(1/pq_i)=(1/pq_{i+1})+(1/d)$. In order to maximise the common throughput, $q_d$ is set equal to one yielding $(1/pq_i)=(1/p)+((d-i)/d)$. The throughput per processor is $(pq_!)=(dp/(d+(d-1)p))$.

Considering the case of a d(1)...d(k)-X-d(1)...d(k) delta network, by similar reasoning to the above there can be derived the relation $(1/pq_i)=((1/p)+(d(1)-i(1))/d(1))+...+((d(k)-i(k))/d(k))$, where processor i is connected to the i(1) input of a crossbar in the first stage and the i(k) inputs of crossbars in the kth stage.

The throughput per processor is
$pd(1)...d(k)/>d(1)...d(k)+p[d(1)-1]...d(k)$
$+...+pd(1)...[d(k)-1]∞$.

Thus, in the case $d(1)=...d(k)=d$, if $Q_k$ denotes the throughput per processor for a k stage network, then $Q)=p$ and $Q_j=g(Q_{j-1})$, where $g(x)=dx/(d+(d-1)x)$. Since $g(x)=x-((d-1)/d)x2+O(x3)$, $Q_k$ is asymptotic to

d/(d-1)k for kz+ with d fixed.

The foregoing calculations can be summarised in the following way. If $pq_i$ is regarded as the "aggressivity" of the ith processor, then $1/pq_i$ may be regarded as its "timidity". The parameters $q_i$ should be chosen so that the timidities of the inputs to a d-X-d crossbar form an arithmetic progression with increment $1/d$, in other words, they should be chosen in an inverse relationship to the processor priorities determined by the inter-processor communication arrangement.

## Claims

1. A method of conflict resolution in a parallel processor network comprising the steps of:
   – providing, in the inter-processor communication arrangement of the network, a fixed priority resolution mechanism;
   – arranging for each processor, when wishing to communicate with another processor, independently of any other processor, to generate a random number, comparing the random number with a threshold particular to the potentially requesting processor, and causing the processor to send its request to the inter-processor communication arrangement only if the generated random number is in a given inequality state relative to the threshold; and
   – setting the threshold in and for each processor such that there exists a bias created in favour of the lowest priority processors as determined by the fixed priority order.

2. A method as claimed in claim 1, wherein the threshold values are chosen to be in inverse relationship to the relative priorities as determined by the inter-processor communication arrangement and form a monotonic sequence of values.

3. A method as claimed in either preceding claim, wherein the random number is generated by selectively utilising the numerically-coded outcome of either a random experiment or of random-like short run of a deterministic experiment.

4. A method according to claim 1, wherein the inter-processor communication arrangement includes at least one stage of a crossbar switch.

## Patentansprüche

1. Verfahren zur Konfliktauflösung in einem Parallelprozessornetzwerk, mit den Verfahrensschritten des
   – Vorsehens eines festen Prioritätsauflösungsmechanis musses in der Interprozessor-Kommunikationsanordnung des Netzwerks,
   – Einrichtens für jeden Prozessor, daß dieser, wenn er mit einem anderen Prozessor kommunizieren will, unabhängig von irgendeinem anderen Prozessor, eine Zufallszahl erzeugt, Vergleichens der Zufallzahl mit einer Schwelle, die für jeden potentiell anfordernden Prozessor individuell ist, und Bewirkens daß der Prozessor seine Anforderung an die Interprozessor-Kommunikationsanordnung nur dann sendet, wenn die erzeugte Zufallszahl in einem gegebenen Ungleich heitszustand in bezug auf die Schwelle ist, und
   – Setzens der Schwelle in und für jeden Prozessor so, daß ein Bias vorliegt, der zu Gunsten der Prozessoren mit niedrigster Priorität, bestimmt durch die feste Prioritätsreihenfolge, geschaffen wird.

2. Verfahren nach Anspruch 1, bei welchem die Schwellenwerte so gewählt werden, daß sie in umgekehrter Beziehung zu den relativen Prioritäten, bestimmt durch die Interprozessor-Kommunikationsanordnung, stehen und eine monotone Folge von Werten bilden.

3. Verfahren nach irgendeinem vorstehenden Anspruch, bei welchem die Zufallszahl durch ausgewählte Vewendung des numerisch kodierten Resultats entweder eines Zufallsexperiments oder eines zufallsartigen Kurzlaufes eines deterministischen Experiments erzeugt wird.

4. Verfahren nach Anspruch 1, bei welchem die Interprozessor-Kommunikationsanordnung wenigstens eine Stufe eines Crossbar-Schalters enthält.

## Revendications

1. Un procédé de résolution des conflits dans un réseau parallèle de processeurs, comportant les étapes consistant à:
   – prévoir, dans l'installation de communication entre processeurs du réseau, un système fixe de résolution des priorités,
   – prévoir pour chaque processeur, lorsqu'il souhaite communiquer avec un autre processeur et indépendamment de tout autre processeur, la génération d'un nombre aléatoire, comparer ce nombre aléatoire à un seuil propre au processeur susceptible d'émettre la requête et ne faire envoyer par le processeur sa requête à l'installation de communication entre processeurs que si le nombre aléatoire produit est dans une situation d'inégalité donnée par rapport au seuil, et
   – dans chaque processeur et pour chaque processeur, ajuster le seuil de manière à créer en faveur des processeurs de plus faible priorité un avantage déterminé conformément à l'ordre fixe des priorités.

2. Le procédé de la revendication 1, dans lequel les valeurs de seuil sont choisies de manière à être en relation inverse des priorités relatives déterminées par l'installation de communication entre processeurs et à former une séquence monotone de valeurs.

3. Le procédé de l'une des revendications précédentes, dans lequel le nombre aléatoire est produit par utilisation sélective du résultat codé numériquement soit d'un essai aléatoire soit d'un essai déterministe exécuté de façon quasi-aléatoire sur une courte durée.

4. Le procédé de la revendication 1, dans lequel l'installation de communication entre processeurs comprend au moins un étage d'un commutateur crossbar.

FIG. 1

EP 0 214 840 B1

FIG. 2A

U013A
74LS244A

LOW — 1 | OE

INPUT 0 — 8 | I0   Z0 | 12 — DATA 0
INPUT 1 — 6 | I1   Z1 | 14 — DATA 1
INPUT 2 —— 4 | I2   Z2 | 16
INPUT 3 — 2 | I3   Z3 | 18 — DATA 3

DRIVER
INPUTS 0,1,2,3

UQ14
PAL16LD8

(0,3)-REQUEST — 1
(1,3)-REQUEST — 2
(2,3)-REQUEST — 3
(3,3)-REQUEST — 4
(4,3)-REQUEST — 5
(5,3)-REQUEST — 6
(6,3)-REQUEST — 7
(7,3)-REQUEST — 8
9

19 — (0,3)-GRANT
18 — <1,3>-GRANT
17 — <2,3>-GRANT
16 — <3,3>-GRANT
15 — <4,3>-GRANT
14 — <5,3>-GRANT
13 — <6,3>-GRANT
12 — <7,3>-GRANT
11

PRIORITY
OUTPUT 3

UQ15
PAL16HD8

1
2
3
4
5
6
7
8
DATA 0 — 9

19 — OUTPUT 3
18 — DATA 7
17 — DATA 6
16 — DATA 5
15 — DATA 4
14 — DATA 3
13 — DATA 2
12
11 — DATA 1

FORWARD MUX
OUTPUT 3

U013B
74LS244B

OE | 19 ◄— LOW

BACKWARD DATA 0 — 3 | Z0   I0 | 17 — BACKWARD INPUT 0
BACKWARD DATA 1 — 5 | Z1   I1 | 15 — BACKWARD INPUT 1
BACKWARD DATA 2 — 7 | Z2   I2 | 13 — BACKWARD INPUT 2
BACKWARD DATA 3 —— 9 | Z3   I3 | 11 — BACKWARD INPUT 3

FIG. 2B

DRIVER
BACKWARD INPUTS 0,1,2,3

EP 0 214 840 B1

```
/OREQUEST /1REQUEST /2REQUEST /3REQUEST /4REQUEST
/5REQUEST /6REQUEST /7REQUEST NC        GND
NC        /7GRANT   /6GRANT   /5GRANT   /4GRANT
/3GRANT   /2GRANT   /1GRANT   /OGRANT   VCC
```

OGRANT  = OREQUEST

1GRANT  =/OREQUEST* 1REQUEST

2GRANT  =/OREQUEST*/1REQUEST* 2REQUEST

3GRANT  =/OREQUEST*/1REQUEST*/2REQUEST* 3REQUEST

4GRANT  =/OREQUEST*/1REQUEST*/2REQUEST*/3REQUEST
        * 4REQUEST

5GRANT  =/OREQUEST*/1REQUEST*/2REQUEST*/3REQUEST
        */4REQUEST* 5REQUEST

6GRANT  =/OREQUEST*/1REQUEST*/2REQUEST*/3REQUEST
        */4REQUEST*/5REQUEST* 6REQUEST

7GRANT  =/OREQUEST*/1REQUEST*/2REQUEST*/3REQUEST
        */4REQUEST*/5REQUEST*/6REQUEST* 7REQUEST

PAL16LD8 PRIORITY CIRCUIT

# FIG. 3

```
/OGRANT  /1GRANT  /2GRANT  /3GRANT  /4GRANT
/5GRANT  /6GRANT  /7GRANT  DATA0    GND
DATA1    NC       DATA2    DATA3    DATA4
DATA5    DATA6    DATA7    OUTPUT   VCC
```

OUTPUT= OGRANT* DATA0

    + 1GRANT* DATA1

    + 2GRANT* DATA2

    + 3GRANT* DATA3

    + 4GRANT* DATA4

    + 5GRANT* DATA5

    + 6GRANT* DATA6

    + 7GRANT* DATA7

PAL16HD8 FORWARD MUX, BACKWARD MUX

# FIG. 4

EP 0 214 840 B1